# EUROPÄISCHE PATENTANMELDUNG

(11) **EP 2 685 622 A2**
(43) Veröffentlichungstag der Anmeldung: **15.01.2014**
(21) Anmeldenummer: 13003476.2
(22) Anmeldetag: 09.07.2013
(51) Int. Cl.: H02M 7/5395, H02M 1/38

(54) **PWM Verfahren mit Gleichtaktüberlagerung zur Einhaltung von Mindestzeiten für Wechselrichter mit mehreren Halbbrücken und Wechselrichter**

(30) Priorität: 12.07.2012 DE 102012013808
(71) Anmelder: Jungheinrich Aktiengesellschaft, 22047 Hamburg (DE)
(72) Erfinder: Glaeske, Jens, 22844 Norderstedt (DE)
(74) Vertreter: Hauck Patent- und Rechtsanwälte

(57) **Zusammenfassung**

Wechselrichter mit einer Vielzahl von Halbbrücken, die jeweils zwei Ventile (Q1, Q2, Q3, Q4, Q5, Q6) zum wechselweisen Schalten aufweisen, und mit einer Ansteuereinrichtung, die die Ventile (Q1, Q2, Q3, Q4, Q5, Q6) in einem vorgegebenen Takt schaltet, wobei innerhalb eines Taktes die Ventile (Q1, Q2, Q3, Q4, Q5, Q6) einer Halbbrücke wechselweise nach einer Pulslänge umgeschaltet werden, um einen vorgegebenen Sollwert für die Spannung in der Halbbrücke zu erreichen, wobei die Ansteuerungseinheit eine kritische Pulslänge (tₖᵣᵢₜ) und einen Pulslängendifferenzwert (Δt) aufweist und bei Erreichen der kritischen Pulslänge (tₖᵣᵢₜ) für die Ansteuerung eines der Ventile in einer der Halbbrücken die Pulslänge in sämtlichen Halbbrücken um den Pulslängendifferenzwert (Δt) verlängert.

## Beschreibung

Die vorliegende Erfindung betrifft einen Wechselrichter mit einer Vielzahl von Halbbrücken und ein Verfahren zum Betreiben eines Wechselrichters.

Wechselrichter dienen dazu, eine beispielsweise von einer Batterie bereitgestellte Gleichspannung in eine Wechselspannung umzurichten. Bei Wechselrichtern zur Drehstromerzeugung ist es bekannt, drei Halbbrücken einzusetzen, wobei die Ausgangsspannung einer Halbbrücke über einen oder mehrere Highside-Transistoren und einen oder mehrere Lowside-Transistoren geschaltet wird. Hierbei wird nicht an jeder Halbbrücke eine Sinusspannung ausgegeben, sondern die Spannung in den Halbbrücken wird derart geschaltet, dass die Ausgangsspannung zwischen den Halbbrücken die gewünschte Sinusspannung für die Ansteuerung einer Leistungsendstufe ergibt.

Bei der Ansteuerung von Wechselrichtern ist es bekannt, dass für kleine Ausgangsspannungen kein sinusförmiger Spannungsverlauf zwischen den drei Phasen erzeugt werden kann. Ferner ist es bekannt, bei der Ansteuerung des Wechselrichters kleine Spannungen auszublenden und so einen von der Sinusform abweichenden Spannungsverlauf zwischen den Phasen zu erzeugen. Dies wirkt sich in der Regel negativ auf den angeschlossenen Verbraucher aus.

Der vorliegenden Erfindung liegt die Aufgabe zugrunde, einen Wechselrichter sowie ein Verfahren zu dessen Betrieb bereitzustellen, bei denen für kleine Spannungen ein sinusförmiger Verlauf in der Spannungsdifferenz besser dargestellt werden kann. Die Aufgabe wird einen Wechselrichter mit den Merkmalen aus Anspruch 1 sowie ein Verfahren mit den Merkmalen aus Anspruch 11 gelöst. Vorteilhafte Ausgestaltungen bilden jeweils den Gegenstand der Unteransprüche.

Der erfindungsgemäße Wechselrichter besitzt eine Vielzahl von Halbbrücken, insbesondere drei Halbbrücken, die jeweils zwei Ventile zum wechselweisen Schalten besitzen. Ferner besitzt der Wechselrichter eine Ansteuereinrichtung, die die Ventile in einem vorgegebenen Takt schaltet, wobei innerhalb eines Taktes die Ventile einer Halbbrücke wechselweise nach einer Pulslänge umgeschaltet werden, um einen vorgegebenen Sollwert für die Spannung der Halbbrücke zur erreichen. Erfindungsgemäß weist die Ansteuereinheit eine kritische Pulslänge und einen Pulslängendifferenzwert auf. Erreicht eines der Ventile einer Halbbrücke die kritische Pulslänge für seine Ansteuerung, so wird die Pulslänge in sämtlichen Halbbrücken um den Pulslängendifferenzwert verlängert. Bei dem erfindungsgemäßen Verfahren wird also eine Ansteuerung der Ventile mit einer Pulslänge, deren von der Ansteuereinheit vorgegebener Sollwert kürzer als die kritische Pulslänge ist vermieden, indem die Pulslängen in sämtlichen Halbbrücken für die Ansteuerung der Ventile um den Pulslängendifferenzwert verlängert werden. Die Verlängerung der Pulslängen in allen Halbbrücken führt dazu, dass sich die Spannung in sämtlichen Halbbrücken verändert, nicht aber die Differenz zwischen den Spannungen. Auf diese Weise kann ein sinusförmiger Verlauf der Spannungsdifferenz auch für kleine Spannungen exakt abgebildet werden, da eine Ansteuerung der Ventile mit Sollwerten kleiner als die kritische Pulslänge vermieden wird.

In einer bevorzugten Weiterführung der Erfindung schaltet die Ansteuereinheit in einem Takt zweimal zwischen den Ventilen einer Halbbrücke um, wobei zwischen dem Umschalten der Ventile einer Halbbrücke eine Totzeit vorgesehen ist, in der beide Ventile ausgeschaltet sind. Die kritische Pulslänge, die sich auf den von der Ansteuereinheit vorgesehenen Sollwert für die Ansteuerung eines Ventils bezieht, ist größer als die Totzeit.

In einer ebenfalls bevorzugten Ausgestaltung ist für die Ventile eine minimale Ansteuerzeit vorgesehen, für deren Dauer ein Ventil mindestens eingeschaltet sein muss. Die kritische Pulslänge der Ansteuereinheit ist bevorzugt größer als die minimale Ansteuerzeit.

Bevorzugt ist die kritische Pulslänge größer oder gleich der Summe aus minimaler Ansteuerzeit und Totzeit. Wird eines der Ventile in einer Halbbrücke mit einer Pulslänge angesteuert, die gleich der Summe aus minimaler Ansteuerzeit und Totzeit ist, so kann bei der Ansteuerung des Ventils mit der kritischen Pulslänge als Sollwert dessen Signal sauber dargestellt werden. Mit Beginn der Pulslänge wird das komplementäre Ventil in der Halbbrücke ausgeschaltet, während die Totzeit verstreicht, sind beide Ventile ausgeschaltet. Danach wird das mit der kritischen Pulslänge als Sollwert angesteuerte Ventil geschaltet und verbleibt mindestens während der minimalen Ansteuerzeit eingeschaltet, so dass das Signal sich sauber darstellen lässt. Bei einer kritischen Pulslänge kürzer als die Summe aus minimaler Ansteuerzeit und Totzeit, würde entweder die notwendige Totzeit oder die minimale Ansteuerzeit unterschritten, so dass das Signal nicht korrekt dargestellt werden könnte.

In einer weiter bevorzugten Ausgestaltung ist der Pulslängendifferenzwert größer oder gleich der kritischen Pulslänge. Auf diese Weise wird sichergestellt, dass, wenn die Pulslängen in den Halbbrücken von 0 auf den Pulslängendifferenzwert angehoben wird, das entsprechende Signal sauber dargestellt werden kann, da keines der Ventile mit einem Sollwert für eine Pulslänge angesteuert wird, der kleiner als die kritische Pulslänge ist.

Bei dem erfindungsgemäßen Wechselrichter ist in einer bevorzugten Ausgestaltung vorgesehen, dass, wenn die kritische Pulslänge in einer ersten Halbbrücke erreicht wurde, in einer darauf folgenden ersten Vielzahl von Takten, die um den Pulslängendifferenzwert verlängerte Pulslänge in der ersten Halbbrücke bis zu dem Pulslängendifferenzwert schrittweise verkürzt wird. Die kritische Pulslänge wird in der ersten Halbbrücke erreicht, wenn aufgrund des vorgegebenen Verlaufs der Ausgangsspannung der Sollwert für die Pulslänge die kritische Pulslänge erreicht. Nach dem erfindungsgemäßen Verlängern der Pulslänge um den Pulslängendifferenzwert wird die verlängerte Pulslänge in der ersten Halbbrücke bis zu dem Pulslängendifferenzwert schrittweise verkürzt. Die schrittweise Verkürzung erfolgt dabei bevorzugt so, dass zu vorgegebenen Sollwerten stets der Pulslängendifferenzwert addiert wird, so dass, wenn der Sollwert den Pulslängendifferenzwert erreicht hat, dies dem Wert bei nicht verlängerter Pulslänge entsprechen würde.

In einer bevorzugten Weiterbildung der Erfindung wird zur Kompensation der verlängerten Pulslänge in der ersten Halbbrücke nach Erreichen der kritischen Pulslänge in der ersten Halbbrücke in einer zweiten Halbbrücke die Pulslänge auf dem Wert des Pulslängendifferenzwertes für die darauf folgende erste Vielzahl von Takten konstant gehalten. Die zweite Halbbrücke ist dabei bevorzugt diejenige Halbbrücke, bei der durch das erfindungsgemäße Verlängern der Pulslänge die Pulslänge von 0 auf den Pulslängendifferenzwert angehoben wurde. Dieser angehobene Pulslängendifferenzwert wird konstant gehalten, solange in der ersten Halbbrücke die verlängerte Pulslänge schrittweise auf den Pulslängendifferenzwert verkürzt wird. Auf diese Weise bleibt die Spannungsdifferenz zwischen erster und zweiter Halbbrücke unverändert.

In einer bevorzugten Weiterbildung des erfindungsgemäßen Wechselrichters wird, wenn die erste Halbbrücke den Pulslängendifferenzwert nach der schrittweisen Verkürzung wieder erreicht hat, deren Pulslängen für eine zweite Vielzahl von Takten auf dem Wert des Pulslängendifferenzwertes konstant gehalten. Bei dieser Ausgestaltung wird die Pulslänge in der ersten Halbbrücke auf dem Wert des Pulslängendifferenzwert konstant gehalten und ist somit gegenüber dem eigentlichen vorgesehenen Wert von Null um den Pulslängendifferenzwert erhöht.

Bevorzugt wird, wenn in der ersten Halbbrücke in der zweiten Vielzahl von Takten der Wert für die Pulslänge auf dem Wert des Pulslängendifferenzwertes konstant gehalten wird, in der zweiten Halbbrücke in der zweiten Vielzahl von Takten die in Pulslänge schrittweise um die kritische Pulslänge verlängert. Auf diese Weise verhält sich die zweite Halbbrücke in der zweiten Vielzahl von Takten zeitlich genau umgekehrt zu der ersten Halbbrücke während der ersten Vielzahl von Takten. Bevorzugt, aber nicht notwendigerweise, entspricht die erste Vielzahl von Takten der zweiten Vielzahl von Takten.

Nach der zweiten Vielzahl von Takten, in der die Pulslänge der ersten Halbbrücke konstant und die Pulslänge der zweiten Halbbrücke schrittweise verlängert wird, wird die erste Halbbrücke gesperrt und in den übrigen Halbbrücken die Pulslänge um den Pulslängendifferenzwert verkürzt. Hieran anschließend kann wieder eine Darstellung der Ausgangsspannung über die gewohnten Pulslängen erfolgen, da diese länger als die kritische Pulslänge sind.

Die erfindungsgemäße Aufgabe wird ebenfalls durch ein Verfahren zum Betreiben eines Wechselrichters mit den Merkmalen aus Anspruch 11 gelöst.

Bei dem erfindungsgemäßen Verfahren werden jeweils zwei Ventile in einer Halbbrücke wechselweise umgeschaltet, wobei die Ventile in einem vorgegebenen Takt und innerhalb des Taktes wechselweise nach einer Pulslänge umgeschaltet werden, um einen vorgegebenen Sollwert für die Spannung in der Halbbrücke zu erreichen. Bei dem erfindungsgemäßen Verfahren wird bei Erreichen einer kritischen Pulslänge für die Ansteuerung eines der Ventile in einer der Halbbrücken die Pulslänge in sämtlichen Halbbrücken um einen Pulslängendifferenzwert verlängert. Auf diese Weise kann mit dem erfindungsgemäßen Verfahren vermieden werden, dass irgendein Ventil in dem Wechselrichter mit einem Sollwert für eine Pulslänge angesteuert wird, der kleiner als die kritische Pulslänge ist.

Bevorzugt ist die kritische Pulslänge größer als die Totzeit, die bei dem Wechselrichter nach dem Ausschalten eines ersten Ventils und vor dem Einschalten eines zweiten Ventils vorgesehen ist. Bevorzugt ist die kritische Pulslänge ebenfalls größer als die minimale Ansteuerzeit, während der ein Ventil in der Halbbrücke angesteuert sein muss, um eine saubere Signaldarstellung zu erhalten.

Bevorzugt ist die kritische Pulslänge größer oder gleich der Summe aus minimaler Ansteuerzeit und Totzeit. Ebenfalls ist bei dem erfindungsgemäßen Verfahren vorgesehen, dass der Pulslängendifferenzwert größer oder gleich der kritischen Pulslänge ist.

Bei dem erfindungsgemäßen Verfahren löst das Erreichen der kritischen Pulslänge in einer ersten Halbbrücke aus, dass in einer darauf folgenden ersten Vielzahl von Takten die um dem Pulslängendifferenzwert verlängerte Pulslänge bis zu dem Pulslängendifferenzwert schrittweise verkürzt wird. Der Verlauf der Pulslänge während der ersten Vielzahl von Takten entspricht dabei dem Verlauf der Sollwerte für die Pulslänge wie er zur Darstellung der sinusförmigen Spannungsdifferenz erforderlich ist, jedoch sind die Sollwerte jeweils um den Pulslängendifferenzwert vergrößert. Während der ersten Vielzahl von Takten wird in einer zweiten Halbbrücke die Pulslänge auf dem Wert des Pulslängendifferenzwertes konstant gehalten. Auf diese Weise ist sichergestellt, dass die Differenzspannung zwischen erster Halbbrücke und zweiter Halbbrücke sich nicht verändert. Nach der ersten Vielzahl von Takten wird in der ersten Halbbrücke die Pulslänge für eine zweite Vielzahl von Takten konstant auf dem Wert des Pulslängendifferenzwertes gehalten. Während der zweiten Vielzahl von Pulslängen wird in der zweiten Halbbrücke die Pulslänge um die kritische Pulslänge Δt schrittweise verlängert, so dass am Ende der zweiten Vielzahl von Takten die Pulslänge in der zweiten Halbbrücke der Summe aus Pulslängendifferenzwert und kritische Pulslänge entspricht. Erste und zweite Vielzahl von Takten können gleich gewählt sein.

Bevorzugt wird nach der zweiten Vielzahl von Takten die erste Halbbrücke gesperrt und in den anderen Halbbrücken die Pulslänge um den Pulslängendifferenzwert verkürzt.

Ein Ausführungsbeispiel der Erfindung wird nachfolgend näher beschrieben. Es zeigen:
- Fig. 1: einen Wechselrichter mit drei Halbbrücken,
- Fig. 2: den Spannungsverlauf in jeder der Halbbrücken bei einem herkömmlichen Wechselrichter nach dem Stand der Technik,

- Fig. 2.1: der kritische Bereich einer niedrigen Spannung bei einem herkömmlichen Wechselrichter nach Fig. 2,
- Fig. 3: den Verlauf der Spannungsdifferenz der Spannung in den Halbbrücken,
- Fig. 4: die Taktung der Highside- und Lowside-Transistoren in einer Halbbrücke,
- Fig. 4.1: die Taktung der Pulslänge über mehrere Takte,
- Fig. 5: der bei dem erfindungsgemäßen Wechselrichter auftretende Spannungsverlauf in den Halbbrücken und
- Fig. 6: ein Detail des Spannungsverlaufs bei niedriger Spannung in zwei Halbbrücken.

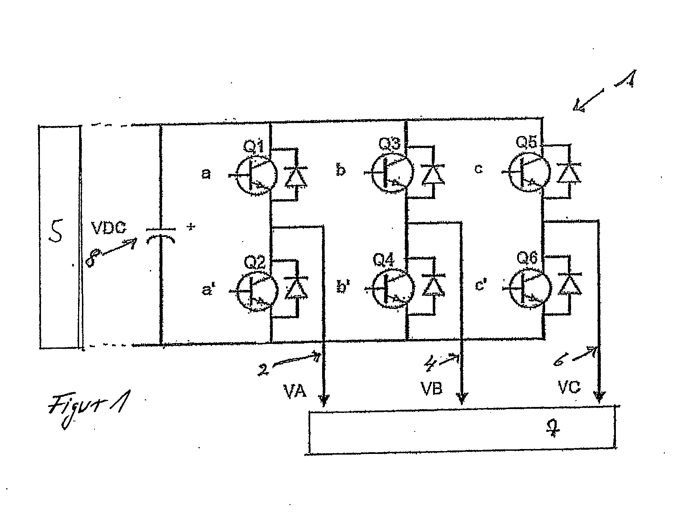

Fig. 1 zeigt einen Wechselrichter 1 mit einer Gleichspannungsquelle 8 und drei Phasenausgänge 2, 4, 6. Die Phasenausgänge 2, 4, 6 sind mit einem nicht näher dargestellten Drehstromverbraucher, wie beispielsweise einem Motor 7 verbunden. Angesteuert wird der Wechselrichter über eine Ansteuereinheit 5, die die Ventile Q1 1 bis Q6 ansteuert. Die Stromventile sind in Fig. 1 als Transistoren dargestellt, können aber auch aus mehreren Transistoren bestehen. Die Transistoren sind in Halbbrücken angeordnet, wobei die Transistoren Q1, Q2 eine erste Halbbrücke, Q3, Q4 eine zweite Halbbrücke und Q5, Q6 eine dritten Halbbrücke bilden. Je nachdem, ob in der ersten Halbbrücke der Transistor Q1 oder Q2 leitend geschaltet ist, liegt bei gleichzeitig gesperrtem anderen Transistor an dem Ausgang 2 der ersten Halbbrücke die positive Spannung der Gleichspannungsquelle oder Masse an. Bei der Taktung der beiden Transistoren Q1 und Q2 ist zu beachten, dass die beiden Transistoren nicht gleichzeitig geöffnet sein können und nach dem Schließen des einen Transistors und vor dem Öffnen des anderen Transistors eine ausreichende Zeitspanne, die Totzeit, verstreichen muss.

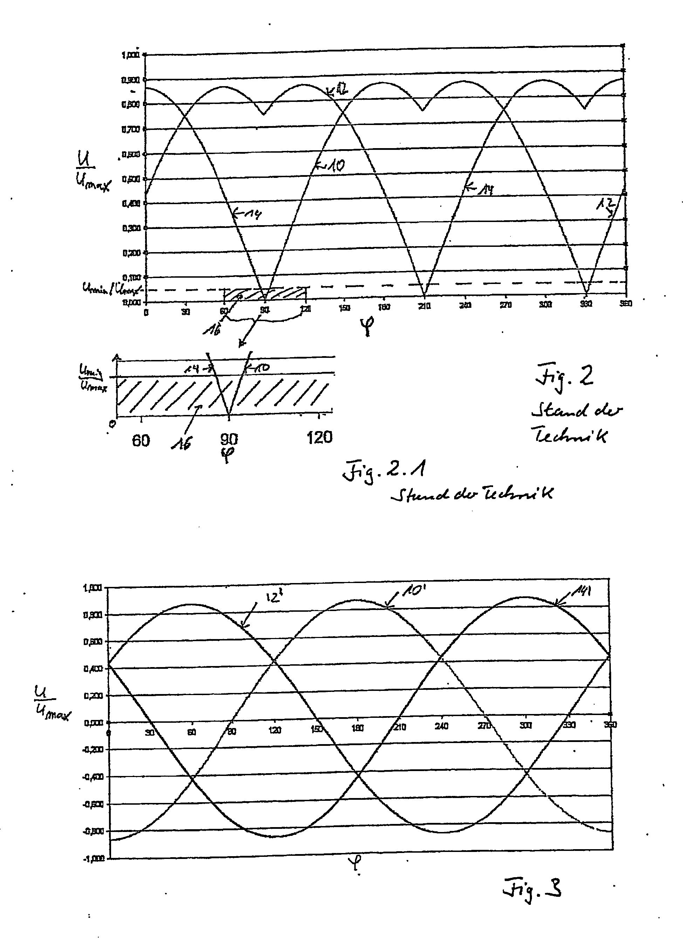

Fig. 2 zeigt den auf eine Maximalspannung Uₘₐₓ normierten Spannungsverlauf an den Ausgängen der Halbbrücke, abhängig von einem Phasenwinkel des Drehstroms. Jeweils an zwei Ausgängen der Halbbrücken liegt eine Spannung an und die dritte Halbbrücke ist auf Masse geschaltet. Über den Phasenwinkel von 0° bis 90° liegt an einer ersten Halbbrücke die Ausgangsspannung 14 an und an einer zweiten Halbbrücke der erste Ast der Ausgangsspannung 12. An dem Verbraucher 7 liegen jeweils die Differenzen an der Ausgangsspannung an, so dass sich der in Fig. 3 dargestellte Spannungsverlauf ergibt. Bei dem in der Fig. 2 dargestellten Beispiel entspricht der Spannungsverlauf 14' der Spannungsdifferenz an den Ausgängen 14 und 12. Der Spannungsverlauf 10' entspricht dem Spannungsverlauf an dem Ausgang 10 minus dem Spannungsverlauf an dem Ausgang 14. Der Spannungsverlauf 12' in Fig. 3 entspricht der Differenz der 12 minus der Spannung 10. Deutlich zu erkennen an Fig. 3 ist, dass durch die Differenzbildung in der Ausgangsspannung ein dreiphasiger, sinusförmiger Spannungsverlauf entsteht, der eine Phasendifferenz von 120° aufweist. Ferner ist zu erkennen, dass jeweils eine der Halbbrücken auf Masse geschaltet ist.

Wie in Fig. 2.1 dargestellt, existiert ein nicht darstellbarer Spannungsbereich 16 unterhalb einer Minimalspannung Uₘᵢₙ. In diesem Spannungsbereich ist es nicht möglich, die Ausgangsspannung einer Halbbrücke exakt darzustellen. Für ein besseres Verständnis der Minimalspannung und deren Zustandekommen sei nachfolgend auf die Pulslänge bei dem Schalten des Highside-Transistors und des Lowside-Transistors abgestellt. Die Beschreibung des Schaltverhaltens eines Wechselrichters auf Basis der Pulslänge und auf Basis der Phasenspannung sind zueinander äquivalent und können direkt ineinander übersetzt werde.

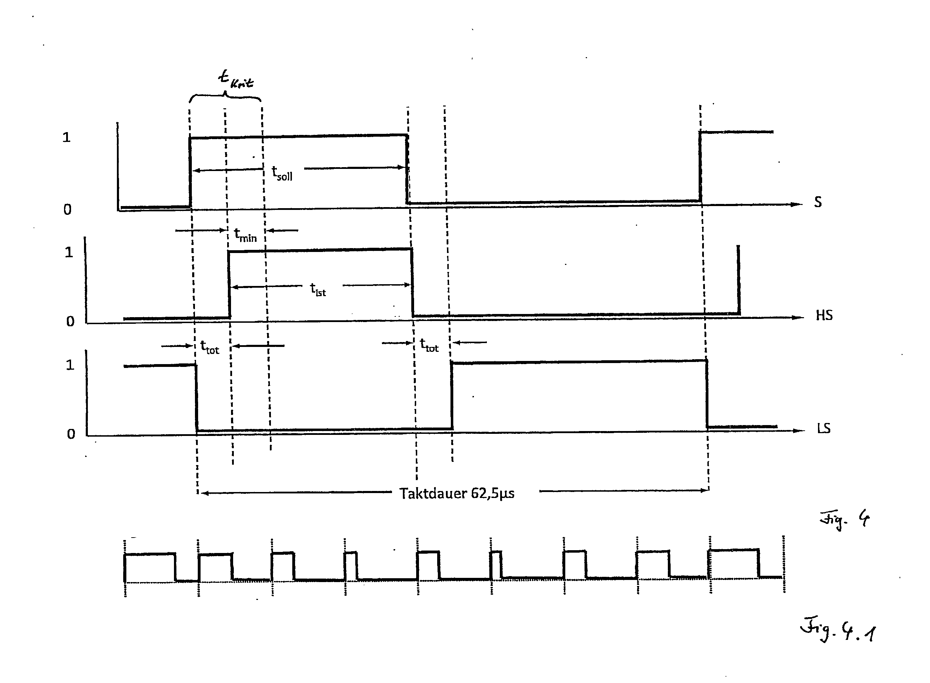

Fig. 4 zeigt über der Zeit das Schalten der Transistoren HS und LS in einer Halbbrücke. In dem mit S bezeichneten Diagramm gibt die Ansteuereinrichtung für die Halbbrücke eine Pulslänge von tₛₒₗₗ vor. Die anliegende Pulslänge von tₛₒₗₗ führt dazu, dass der Lowside-Transistor (LS) von seinem eingeschalteten Zustand in seinen ausgeschalteten Zustand wechselt. Danach verstreicht die Totzeit tₜₒₜ, bevor der Highside-Transistor (HS) von seinem ausgeschalteten Zustand in seinen eingeschalteten Zustand wechselt. Der Highside-Transistor bleibt für die Ist-Pulslänge tᵢₛₜ eingeschaltet und schaltet am Ende der Pulslänger tₛₒₗₗ von seinem eingeschalteten Zustand in seinen ausgeschalteten Zustand. Nach dem Wechseln des Highside-Transistors in seinem ausgeschalteten Zustand verstreicht erneut die Totzeit tₜₒₜ, bevor der Lowside-Transistor von seinem ausgeschalteten Zustand in seine eingeschalteten Zustand wechselt. Das zweifache Umschalten zwischen Highside- und Lowside-Transistor kann zu Beginn eines Taktes erfolgen und am Ende der von der Ansteuereinheit vorgegebenen Pulslänge tₛₒₗₗ. Über mehrere Takte hinweg ergibt sich die schematisch dargestellte Fig. 4.1, bei der unterschiedliche Sollpulslängen dann zu unterschiedlichen Ausgangsspannungen der Halbbrücke führen. Aus der Darstellung in Fig. 4 ergibt sich, dass für den Sollwert tₛₒₗₗ der Pulslänge eine kritische Pulslänge tₖᵣᵢₜ existiert. Die kritische Pulslänge tₖᵣᵢₜ ergibt sich aus der Summe der Totzeit tₜₒₜ und der minimalen Ansteuerzeit tₘᵢₙ für den Highside-Transistor. Die minimale Ansteuerzeit tₘᵢₙ ist die Zeit, die der Highside-Transistor mindestens eingeschaltet sein muss, um ein korrekt dargestelltes Ausgangssignal zu erzielen. Wird also der Sollwert für die Pulslänge tₛₒₗₗ soweit verkürzt, dass der Istwert der Pulslänge tᵢₛₜ der minimalen Ansteuerzeit entspricht, so ist die kürzeste, sauber darstellbare Pulslänge erreicht. Eine weitere Verkürzung der Pulslänge ist mit einer sauberen Darstellung des Ausgangssignals nicht möglich.

Zurück zur Fig. 2.1 bedeutet dies, dass die kritische Pulslänge tₖᵣᵢₜ gerade eine minimale Spannung Uₘᵢₙ definiert, bis zu der der Spannungsverlauf 14 dargstellt werden kann und ab der der Spannungsverlauf 10 dargestellt werden kann. Unterhalb der Spannung Uₘᵢₙ ist in dem Bereich 16 keine Ansteuerung der Ausgangsspannung möglich.

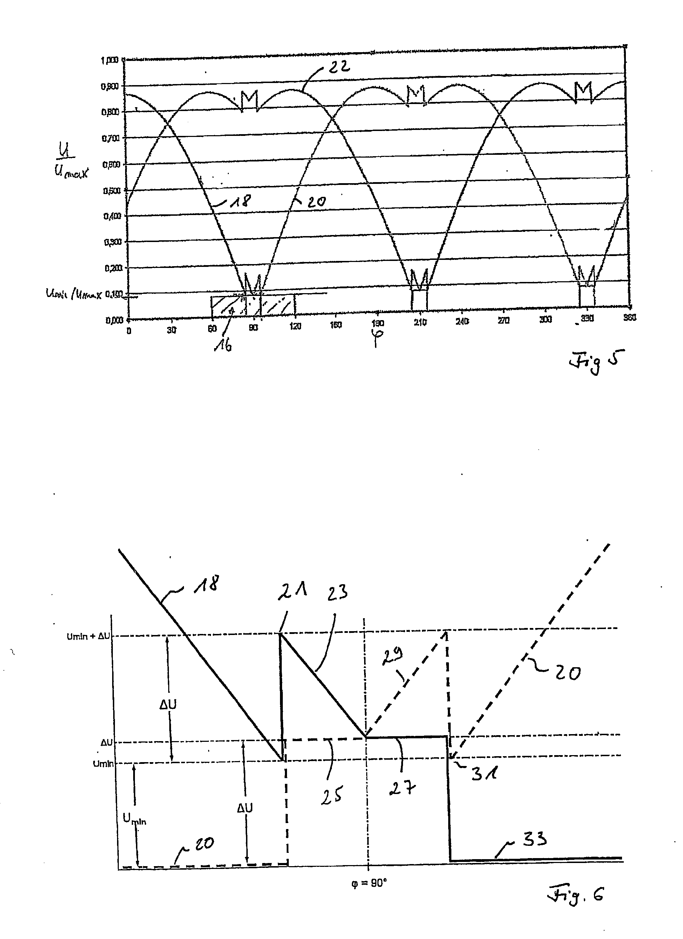

Fign. 5 und 6 zeigen den erfindungsgemäßen Spannungsverlauf der Ausgangsspannung an den Halbbrücken. Der Spannungsverlauf entspricht über weite Bereiche des Phasenwinkels dem in Fig. 2 dargestellten Spannungsverlauf. Lediglich in dem Bereich, in dem eine der Ausgangsspannungen den Wert Uₘᵢₙ erreicht, wird der Spannungsverlauf modifiziert, um Spannungen kleiner als Uₘᵢₙ zu vermeiden. Diese Modifikation des Spannungsverlaufes tritt in dem dargestellten Beispiel bei 90°, 210° und 330° in allen Ausgangsspannungen 18, 20 und 22 der Halbbrücken auf. Wie in Fig. 6 dargestellt, erreicht die Ausgangsspannung 18 die Minimalspannung Uₘᵢₙ, die der kritischen Pulslänge in der Halbbrücke entspricht. Wenn die Minimalspannung Uₘᵢₙ erreicht ist, wird der Sollwert für die Ausgangsspannung um den Spannungsdifferenzwert ΔU sprunghaft hochgesetzt. Gleichzeitig wird die zuvor auf Masse geschaltete Spannung 20 um den Spannungsdifferenzwert ΔU erhöht. Die Ausgangsspannung 18 der ersten Halbbrücke besitzt also nach dem Hochsetzen in Punkt 21 den Spannungswert Uₘᵢₙ + ΔU, während die Ausgangsspannung 20 der anderen Halbbrücke den Spannungsdifferenzwert ΔU besitzt. Übersetzt in die Sprache der Pulslänge bedeutet dies, dass der Sollwert für die Pulslänge, die zur Ausgangsspannung 18 der Halbbrücke führt, bei Erreichen der kritischen Pulslänge tₖᵣᵢₜ um einen Pulslängendifferenzwert Δt hochgesetzt wird.

Die hochgesetzte Spannung 21 der Halbbrücke wird anschließend während einer ersten Vielzahl von Takten auf den Spannungswert ΔU reduziert und der Verlauf der Spannungsreduktion 23 entspricht in seiner Steilheit dem Spannungsverlauf der ersten Halbbrücke, wie er in Fig. 2.1 für Spannungswerte unterhalb von Uₘᵢₙ erforderlich wäre. Die zweite Halbbrücke behält während der ersten Vielzahl von Takten den Spannungswert ΔU bei, bis der Phasenwinkel 90° erreicht ist. Es ist unmittelbar einzusehen, dass die Differenz der Spannungen 23 und 25 hierbei unverändert bleibt.

In der dritten Halbbrücke, deren Ausgangsspannung 22 einen Wert deutlich oberhalb von Uₘᵢₙ besitzt, erfolgt ebenfalls ein sprunghaftes Hochsetzen der Spannung, um einen Spannungswert ΔU und ein nachfolgendes Absenken der Spannung um den Wert Uₘᵢₙ bis der Phasenwinkel 90° erreicht ist. Auch hier bleibt durch das Hochsetzen der Ausgangsspannung 22 und das nachfolgenden Reduzieren um den Wert Uₘᵢₙ, die Differenz der Ausgangsspannung 22 sowohl zu der Ausgangsspannung 18 als auch zu der hochgesetzten Ausgangsspannung 20 bzw. 25 unverändert.

In der Darstellung der Pulslängen bedeutet dies, dass die verlängerte Pulslänge tₖᵣᵢₜ + Δt in einer ersten Vielzahl von Takten schrittweise auf die Pulslänge Δt reduziert ist. Hierbei ist zu beachten, dass der Pulslängendifferenzwert Δt größer als die kritische Pulslänge ist, so dass die mit 23 dargestellte Spannungsabsenkung vollständig darstellbar ist. Auch ist zu beachten, dass der Pulslängendifferenzwert Δt für die dritte Halbbrücke mit ihrer Ausgangsspannung 22 nicht den maximal darstellbaren Spannungswert überschreitet, also der Lowside-Transistor der dritten Halbbrücke mit einer Pulslänge angesteuert wird, die kürzer als die kritische Pulslänge ist.

Nach Erreichen des Phasenwinkels von 90° wird die Spannung in der ersten Halbbrücke für eine zweite Vielzahl von Takten bei dem Wert ΔU entlang 27 konstant gehalten. Gleichzeitig wir die Ausgangsspannung 29 der zweiten Halbbrücke von dem Wert ΔU auf den Wert ΔU + Uₘᵢₙ entlang der Linie 29 schrittweise erhöht. Nachdem die Spannung der zweiten Halbbrücke den Wert Uₘᵢₙ + ΔU erreicht hat, kann die Spannung sprunghaft wieder um ΔU auf den Wert 31 reduziert werden. Gleichzeitig wird die Spannung in der ersten Halbbrücke auf Masse geschaltet (Linie 33). Die dritte Halbbrücke beschreibt einen Spannungsverlauf, der dem Spannungsverlauf der zweiten Halbbrücke entspricht, in dem die Spannung schrittweise um den Spannungswert Uₘᵢₙ erhöht wird und nachfolgend sprunghaft um den Spannungsdifferenzwert ΔU reduziert wird. Grundsätzlich ist der Spannungsverlauf der dritten Halbbrücke zu jedem Zeitpunkt durch den Spannungsverlauf in den ersten beiden Halbbrücken festgelegt, da die Differenzspannung die gewünschten Sinus-Verläufe beschreiben sollen.

In der Darstellung der Pulslängen bedeutet dies, dass, wenn die Pulslänge in der ersten Halbbrücke von dem verlängerten Pulslängenwert tₖᵣᵢₜ + Δt auf den Pulslängendifferenzwert Δt verkürzt wurde, die Pulslänge während der zweiten Vielzahl von Takten entlang der Linie 27 bei dem Pulslängendifferenzwert konstant gehalten wird,und anschließend sprunghaft auf Null reduziert wird. Gleichzeitig wird die Pulslänge in der zweiten Brücke um den kritischen Pulslängenwert schrittweise erhöht, um den Spannungsverlauf 29 zu erzielen und anschließend um den Pulslängendifferenzwert reduziert, um beginnend von einer kritischen Pulslänge tₖᵣᵢₜ in 31 wieder den vorgesehenen Spannungsverlauf 20 zu erzeugen. Auch in der dritten Halbbrücke mit ihrer Ausgangsspannung wird, beginnend bei der Phase von 90°, in einer zweiten Vielzahl von Phasenschritten die Pulslänge um die kritische Pulslänge tₖᵣᵢₜ verlängert und anschließend um den Pulslängendifferenzwert reduziert.

In der vorstehenden Erläuterung wurde bezüglich der Phase ϕ = 90° eine symmetrische Darstellung gewählt, bei der die Kurvenabschnitte 25 und 27 den gleichen Phasenwinkel überdecken. Eine solche symmetrische Darstellung ist keineswegs zwingend. Es ist auch möglich, dass vor und nach dem Phasenwinkel 95° unterschiedliche Phasenwinkel überstrichen werden. Wichtig bei dem erfindungsgemäßen Verfahren ist, dass das Hochsetzen der Pulslänger um den Pulslängendifferenzwert und das Absenken der Pulslänge um den Pulslängendifferenzwert in allen drei Halbbrücken synchron erfolgt.

## Patentansprüche

1. Wechselrichter mit einer Vielzahl von Halbbrücken (2, 4, 6), die jeweils zwei Ventile (Q1, Q2, Q3, Q4, Q5, Q6) zum wechselweisen Schalten aufweisen, und mit einer Ansteuereinrichtung (5), die die Ventile (Q1, Q2, Q3, Q4, Q5, Q6) in einem vorgegebenen Takt schaltet, wobei innerhalb eines Taktes die Ventile (Q1, Q2, Q3, Q4, Q5, Q6) einer Halbbrücke (2, 4, 6) wechselweise nach einer Pulslänge umgeschaltet werden, um einen vorgegebenen Sollwert für die Spannung in der Halbbrücke (2, 4, 6) zu erreichen, **dadurch gekennzeichnet, dass** die Ansteuerungseinheit eine kritische Pulslänge (tₖᵣᵢₜ) und einen Pulslängendifferenzwert (Δt) aufweist und bei Erreichen der kritischen Pulslänge (tₖᵣit) für die Ansteuerung eines der Ventile in einer der Halbbrücken die Pulslänge in sämtlichen Halbbrücken (2, 4, 6) um den Pulslängendifferenzwert (Δt) verlängert.

2. Wechselrichter nach Anspruch 1, **dadurch gekennzeichnet, dass**
• innerhalb eines Taktes zweimal zwischen den Ventilen einer Halbbrücke umgeschaltet wird, wobei zwischen dem Umschalten der Ventile einer Halbbrücke eine Totzeit (tₜₒₜ) vorgesehen ist, in der beide Ventile ausgeschaltet sind, und
• die kritische Pulslänge (tₖᵣᵢₜ) größer als die Totzeit (tₜₒₜ) ist.

3. Wechselrichter nach einem der Ansprüche 1 oder 2, **dadurch gekennzeichnet, dass**
• die Ventile eine minimale Ansteuerzeit (tₘᵢₙ) aufweisen, während der ein Ventil mindestens eingeschaltet sein muss, und
• die kritische Pulslänge (tₖᵣᵢₜ) größer als die minimale Ansteuerzeit (tₘᵢₙ) ist.

4. Wechselrichter nach Anspruch 2 und 3, **dadurch gekennzeichnet, dass** die kritische Pulslänge (tₖᵣᵢₜ) größer oder gleich der Summe aus minimaler Ansteuerzeit (tₘᵢₙ) und Totzeit (tₜₒₜ) ist.

5. Wechselrichter nach einem der Ansprüche 1 bis 4, **dadurch gekennzeichnet, dass** der Pulslängendifferenzwert (Δt) größer oder gleich der kritischen Pulslänge (tₖᵣᵢₜ) ist.

6. Wechselrichter nach einem der vorherigen Ansprüche, **dadurch gekennzeichnet, dass**, wenn die kritische Pulslänge (tₖᵣᵢₜ) in einer ersten Halbbrücke erreicht wurde, in einer darauffolgenden ersten Vielzahl von Takten die verlängerte Pulslänge (tₖᵣᵢₜ + Δt) in der ersten Halbbrücke bis zu dem Pulslängendifferenzwert (Δt) schrittweise verkürzt wird.

7. Wechselrichter nach Anspruch 6, **dadurch gekennzeichnet, dass** nach Erreichen der kritischen Pulslänge (tₖᵣᵢₜ) in der ersten Halbbrücke in einer zweiten Halbbrücke die Pulslängen auf dem Wert des Pulslängendifferenzwerts (Δt) für die darauffolgende erste Vielzahl von Takten konstant gehalten werden.

8. Wechselrichter nach Anspruch 7, **dadurch gekennzeichnet, dass**, wenn die erste Halbbrücke den Pulslängendifferenzwert (Δt) wieder erreicht hat, deren Pulslängen für eine zweite Vielzahl von Takten auf dem Wert des Pulslängendifferenzwerts (Δt) konstant gehalten werden.

9. Wechselrichter nach Anspruch 7 oder 8, **dadurch gekennzeichnet, dass**, wenn die erste Halbbrücke den Pulslängendifferenzwert (Δt) wieder erreicht hat, die vorgesehenen Pulslängen in der zweiten Halbbrücke in der zweiten Vielzahl von Takten um die kritische Pulslänge (tₖᵣᵢₜ) schrittweise verlängert werden.

10. Wechselrichter nach Anspruch 9, **dadurch gekennzeichnet, dass** nach der zweiten Vielzahl von Takten die erste Halbbrücke gesperrt und in den anderen Halbbrücken die Pulslänge um den Pulslängendifferenzwert (Δt) verkürzt wird.

11. Verfahren zum Betreiben eines Wechselrichters, der eine Vielzahl von Halbbrücken (2, 4, 6), mit jeweils zwei Ventilen (Q1, Q2, Q3, Q4, Q5, Q6) zum wechselweisen Schalten aufweist, wobei die Ventile (Q1, Q2, Q3, Q4, Q5, Q6) in einem vorgegebenen Takt und innerhalb des Taktes die Ventile (Q1, Q2, Q3, Q4, Q5, Q6) einer Halbbrücke (2, 4, 6) wechselweise nach einer Pulslänge umgeschaltet werden, um einen vorgegebenen Sollwert für die Spannung in der Halbbrücke (2, 4, 6) zu erreichen, **dadurch gekennzeichnet, dass** bei Erreichen einer kritischen Pulslänge (tₖᵣᵢₜ) für die Ansteuerung eines der Ventile in einer der Halbbrücken (2, 4, 6) die Pulslänge in sämtlichen Halbbrücken (2, 4, 6) um einen Pulslängendifferenzwert (Δt) verlängert wird.

12. Verfahren nach Anspruch 11, **dadurch gekennzeichnet, dass**
• innerhalb eines Taktes zweimal zwischen den Ventilen einer Halbbrücke umgeschaltet wird, wobei zwischen dem Umschalten der Ventile eine Totzeit (tₜₒₜ) verstreicht, in der beide Ventile ausgeschaltet sind, und
• die kritische Pulslänge (tₖᵣᵢₜ) größer als die Totzeit (tₜₒₜ) ist.

13. Verfahren nach einem der Ansprüche 11 oder 12, **dadurch gekennzeichnet, dass**
• die Ventile eine minimale Ansteuerzeit (tₘᵢₙ) aufweisen, während der ein Ventil mindestens eingeschaltet sein muss, und
• wobei die kritische Pulslänge (tₖᵣᵢₜ) größer als die minimale Ansteuerzeit (tₘᵢₙ) ist.

14. Verfahren nach einem der Ansprüche 11 bis 13, **dadurch gekennzeichnet, dass** die kritische Pulslänge (tₖᵣᵢₜ) größer oder gleich der Summe aus minimaler Ansteuerzeit (tₘᵢₙ) und Totzeit (tₜₒₜ) ist.

15. Verfahren nach einem der Ansprüche 11 bis 14, **dadurch gekennzeichnet, dass** der Pulslängendifferenzwert (Δt) größer oder gleich der kritischen Pulslänge (tₖᵣᵢₜ) ist.

16. Verfahren nach einem der Ansprüche 11 bis 15, **dadurch gekennzeichnet, dass**, wenn die kritische Pulslänge (tₖᵣᵢₜ) in einer ersten Halbbrücke erreicht wurde, in einer darauffolgenden ersten Vielzahl von Takten die verlängerte Pulslänge (tₖᵣᵢₜ + Δt) in der ersten Halbbrücke bis zu dem Pulslängendifferenzwert (Δt) schrittweise verkürzt wird.

17. Verfahren nach Anspruch 16, **dadurch gekennzeichnet, dass** bei Erreichen der kritischen Pulslänge (tₖᵣᵢₜ) in der ersten Halbbrücke in einer zweiten Halbbrücke die Pulslängen auf den Wert des Pulslängendifferenzwerts (Δt) für die darauffolgende erste Vielzahl von Takten konstant gehalten werden.

18. Verfahren nach Anspruch 17, **dadurch gekennzeichnet, dass**, wenn die erste Halbbrücke den Pulslängendifferenzwert (Δt) erreicht hat, deren Pulslängen für eine zweite Vielzahl von Takten auf dem Wert des Pulslängendifferenzwerts (Δt) konstant gehalten werden.

19. Verfahren nach Anspruch 17 oder 18, **dadurch gekennzeichnet, dass**, wenn die erste Halbbrücke den Pulslängendifferenzwert (Δt) wieder erreicht hat, die vorgesehenen Pulslängen in der zweiten Halbbrücke in der zweiten Vielzahl von Takten um die kritische Pulslänge tₖᵣᵢₜ schrittweise verlängert werden.

20. Verfahren nach Anspruch 19, **dadurch gekennzeichnet, dass** nach der zweiten Vielzahl von Takten die erste Halbbrücke gesperrt und in den anderen Halbbrücken die Pulslänge um den Pulslängendifferenzwert (Δt) verkürzt wird.
